# EUROPEAN PATENT APPLICATION

(11) **EP 4 086 764 A1**
(43) Date of publication of application: **09.11.2022**
(21) Application number: 21305590.8
(22) Date of filing: 06.05.2021
(51) Int. Cl.: G06F 9/50

(54) **METHOD FOR DYNAMIC RESOURCES ALLOCATION AND APPARATUS FOR IMPLEMENTING THE SAME**

(71) Applicant: ATEME, 78140 Velizy Villacoublay (FR)
(72) Inventor: MOUSSAOUI, Abdelmajid, 91140 Villebon-sur-Yvette (FR)
(74) Representative: Plasseraud IP

(57) **Abstract**

A computer-implemented resource allocation method is provided, which comprises, in a computing environment comprising a resource management unit and a cluster comprising a cluster management node and a cluster node running an application program: receiving, by the resource management unit, a request for allocating one or more system resources to the application program; retrieving, by the resource management unit, from the cluster management node, an identifier of the cluster node running the application program; dynamically updating system physical resources allocated to the cluster node by updating a resource allocation file managed by an operating system of a computing machine on which the cluster is running, based on the identifier of the cluster node and the received request.

## Description

The present disclosure relates to the field of computer resource allocation, in particular for computing environments using an orchestration software.

An "orchestration software" is a software solution that can be used for deploying applications such as micro-services applications through various deployment possibilities in units of software that package up a code and its dependencies for running quickly and reliably on any computing environment. Orchestration software, such as Kubernetes, typically manage various aspects of the units of software, including the allocation of physical (hardware) resources (e.g. CPU, memory), network and service planning and automation.

A Kubernetes cluster is a group of one or more physical or virtual machines on which the units of software, called "Containers," are running. A cluster also has at least one control plane machine, called "Master," and one or more computing servers ("Workers").

An application executed through an orchestration software may be distributed, in that multiple software instances may be running in different cluster nodes in a cluster, a cluster node (called a "Pod" in Kubernetes) being a software unit that may comprise one or more Containers that share the same network and storage, with each Container being configured with physical resources.

Kubernetes includes tools, such as VerticalPodScaling and Rolling Update, that may be used for updating the physical resources allocated to a Pod. However, in each of these tools, a Pod for which physical resources have been updated has to be restarted for the changes to take effect.

However, for time-constrained applications, such as applications that require real-time, or near real-time processing of data, any restart of a Pod produces an additional time delay, which may result in a loss of real-time. For example, for video coding applications used in the context of video distribution in live mode deployed in a Pod, restarting the Pod, even for a few milliseconds, may result in the video encoder hosted by the Pod losing its current state (including encoding parameters calculated during the encoding of previous frames) and losing frames stored in an encoding buffer that need to be encoded or transferred, and eventually to interrupting the encoded video stream output and losing frames.

There is therefore a need for providing an improved resource allocation update scheme and apparatus and software implementing the same that address at least some of the above-described drawbacks and shortcomings of the conventional technology in the art.

It is an object of the present subject disclosure to provide an improved resource allocation scheme and apparatus implementing the same.

Another object of the present subject disclosure is to provide an improved resource allocation update scheme and apparatuses implementing the same.

Another object of the present subject disclosure is to provide an improved hardware resource allocation update scheme and apparatuses implementing the same for alleviating the above-described drawbacks and shortcomings of conventional schemes, in particular schemes provided by orchestration software solutions usable to deploy applications that require real-time or near real-time data processing.

To achieve these objects and other advantages and in accordance with the purpose of the present subject disclosure, as embodied and broadly described herein, in one aspect of the present subject disclosure, a computer-implemented resource allocation method is proposed, which comprises: in a computing environment comprising a resource management unit and a cluster comprising a cluster management node and a cluster node running an application: receiving, by the resource management unit, a request for allocating one or more system resources to the application; retrieving, by the resource management unit, from the cluster management node, an identifier of the cluster node running the application; and dynamically updating system physical resources allocated to the cluster node by updating a resource allocation file managed by an operating system of a computing machine on which the cluster is running, based on the identifier of the cluster node and the received request.

Therefore, advantageously, system physical resources allocated by a cluster management node to a cluster node running an application (e.g. resources, such as CPU resources and memory allocated by a Master to a Pod in a Kubernetes environment) may be dynamically updated, that is, updated while the cluster node is running the application, with the update to take effect without any need for restarting the cluster node.

In cases where the cluster node runs an application with real-time or near real-time processing of data, the resource allocated for the execution of the application may advantageously be updated without impacting the real-time or near real-time of data processing required by the application, so that data loss resulting from the resource allocation update may be avoided.

The proposed scheme is advantageously very flexible, and may be implemented in any computing environment comprising a resource management unit provided by the present subject disclosure and a cluster comprising a cluster management node and a cluster computing node, wherein the cluster computing node comprises a cluster node running an application such as, for example, a Kubernetes cluster comprising a Master and a Worker provided with a Pod. Further, the proposed scheme advantageously provides a resource management unit that may be implemented external to the cluster, so that does not require updating code developed for running an application in an orchestration software environment, which avoids software development backward compatibility issues.

In one or more embodiments, the cluster node may be comprised in a cluster computing node of the cluster. Such cluster computing node may correspond to a Worker in a Kubernetes environment.

In one or more embodiments, the system physical resources allocated to the cluster node may have been allocated by the cluster management node to the cluster node. Such will be the case when the proposed method is used for updating resources initially allocated by the cluster management node operating as a scheduler of the orchestration software environment, for example initially allocated by the Master of the Cluster on which the application program is executed.

The proposed scheme may advantageously be used with time-constrained applications, for which restarting the cluster node further to a resource allocation update would be particularly prejudicial. For example, in one or more embodiments, the application program may be a video processing application program, such as a video encoding and/or decoding program.

In one or more embodiments, the request may comprise system resources of the computing machine to be allocated to the application program.

In one or more embodiments, the resource allocation file may be used by the operating system to allocate resources of the computing machine to the cluster node.

In one or more embodiments, the cluster node may comprise one or more container nodes, and the method may further comprise: retrieving, by the resource management unit, from the cluster management node, respective identifiers of the one or more container nodes, and wherein the resource allocation file is updated based on the identifiers of the one or more container nodes.

In one or more embodiments, the proposed method may further comprise: creating, by the resource management unit, a resource allocation process running on the operating system in the cluster computing node, and receiving, from the resource allocation process, a first resource allocation status of system resources currently allocated to the cluster node, and determining a system resource allocation update based on the first resource allocation status and the received request, wherein the resource allocation file is updated based on the system resource allocation update.

In one or more embodiments, the proposed method may further comprise: transmitting to the resource allocation process a request for the first resource allocation status, wherein the first resource allocation status is received in response to the request for the first resource allocation status.

In one or more embodiments, the proposed method may further comprise: receiving, from the resource allocation process, a second resource allocation status of system resources that are not currently allocated to the cluster node, wherein the system resource allocation update is further determined based on the second resource allocation status.

In one or more embodiments, dynamically updating resource allocation files managed by the operating system comprises: updating respective values of one or more resource allocation parameters configured in the resource allocation file for the cluster node, for example by the cluster management node.

In one or more embodiments, the one or more system resources may comprise CPU resources which comprise a CPU quota parameter defining a number of CPU cores, and the updating the resource allocation file may comprise setting a value of the CPU quota parameter to a value representing a number of CPU cores allocated to the cluster node. In some embodiments, the value represents an integer number of CPU cores.

In one or more embodiments, the cluster computing node may be executed on a physical machine, and the value may be determined such that a cumulative number of CPU cores allocated to cluster nodes, for example of the cluster computing node, does not exceed CPU resources that are available on the physical machine.

In one or more embodiments, the proposed method may further comprise: in case a cumulative number of CPU cores allocated to cluster nodes, for example of the cluster computing node, exceeds CPU resources that are available on the physical machine, responding to the request for allocating one or more system resources with a message informing that the request cannot be served.

In one or more embodiments, the one or more system resources may comprise CPU resources which comprise CPU cores, and the updating the resource allocation file may comprise assigning all the software threads of the cluster node to one or more CPU cores among the CPU cores. In some embodiments, the proposed method may further comprise: assigning a maximum execution priority to the execution of the cluster node on the one or more CPU cores.

In one or more embodiments, the one or more system resources may comprise CPU resources which comprise CPU cores, and the updating the resource allocation file may comprise assigning all the software threads of the cluster node to CPU cores of a same physical CPU node, for example of the cluster computing node.

In another aspect of the present subject disclosure, an apparatus is proposed, which comprises a processor, and a memory operatively coupled to the processor, wherein the apparatus is configured to perform a method according to one or more embodiments proposed in the present subject disclosure.

In yet another aspect of the present subject disclosure, a non-transitory computer-readable medium encoded with executable instructions which, when executed, causes an apparatus comprising a processor operatively coupled with a memory, to perform a method according to one or more embodiments proposed in the present subject disclosure, is proposed.

For example, in some embodiments, the present subject disclosure provides a non-transitory computer-readable medium encoded with executable instructions which, when executed, causes an apparatus comprising a processor operatively coupled with a memory, to allocate resources in a computing environment comprising a resource management unit and a cluster comprising a cluster management node and a cluster node running an application by performing receiving, via the processor, by the resource management unit, a request for allocating one or more system resources to the application; retrieving, via the processor, by the resource management unit, from the cluster management node, an identifier of the cluster node running the application; and dynamically updating system physical resources allocated to the cluster node by updating, via the processor, a resource allocation file managed by an operating system of a computing machine on which the cluster is running, based on the identifier of the cluster node and the received request.

In yet another aspect of the present subject disclosure, a computer program product comprising computer program code tangibly embodied in a computer readable medium, said computer program code comprising instructions to, when provided to a computer system and executed, cause said computer to perform a method according to an embodiment proposed in the present subject disclosure, is proposed.

In another aspect of the present subject disclosure, a data set representing, for example through compression or encoding, a computer program as proposed in the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 is a block diagram illustrating an exemplary orchestration software on which the proposed method may be implemented in accordance with one or more embodiments;
Figure 2 is a block diagram illustrating an exemplary resource allocation method in accordance with one or more embodiments;
Figure 3a shows an exemplary architecture of a computing environment in accordance with one or more embodiments;
Figure 3b shows an exemplary resource management unit and operations thereof in accordance with one or more embodiments;
Figure 4 illustrates an exemplary apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

The terms "application," "program," or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the equipment on which the application program is implemented. For example, a graphical user interface (or GUI) may be generated and displayed on a screen of the user equipment, or an audio user interface may be played back to the user using a speaker, a headset or an audio output.

The term "multimedia content" as used in the present description corresponds to any audio and/or video or audiovisual content, with or without closed captions, open captions, subtitles, timed text or visual descriptors.

In the present description, the terms "real-time" distribution, distribution "in linear mode", distribution "in linear TV mode", distribution "in dynamic mode" and "live" distribution or distribution "in live mode" are used interchangeably to denote the distribution in live mode or dynamic mode of multimedia content in a content distribution system to terminals, comprising in particular the distribution of the content as it is generated, as opposed to distributing content generated previously, upon an access request from a user (distribution upon an access request or "static" distribution or distribution in static mode), such as for example content recorded on a server and made available to users by a video on demand (VOD) service.

In the present description, the term "real-time" as used herein in the context of video distribution, video encoding or compressing video content, refers to the encoding or compression of video content at least at the same speed, for example expressed in frames per second, as it is generated by one or more video content sources. For instance, if content is generated at 50 frames per second (fps) it will be deemed encoded in real-time as long as it is also encoded at at least 50 fps.

In the present description, the term "live content" refers to content, for example multimedia content, that is distributed, for example using an Over-The-Top (OTT) distribution mode, in dynamic mode (as opposed to the static distribution mode). Live content will typically be generated by a television station, or by any type of television medium, and may also be distributed on a multimedia content broadcast network, in addition to being made available on content servers in an OTT distribution system.

In the present description, the terms "client" and "client unit" are used interchangeably to denote any type of device, implemented by one or more items of software, one or more items of hardware, or a combination or one or more items of software and one or more items of hardware, configured to present requests, such as resource allocation requests, to a resource management unit according to embodiments of the present subject disclosure, and to receive responses to such requests.

The terms "network" and "communication network" as used in the present description refer to one or more data links that may couple or connect possibly virtualized equipment so as to allow electronic data to be transported between computer systems and/or modules and/or other devices or electronic equipment, such as between a server and a client device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols and interoperate with larger networks. Various types of equipment may be used to make various architectures or various protocols interoperable. For example, a router may be used to provide a communication link or a data link between two LANs that would otherwise be separate and independent.

The proposed methods may be implemented by any video encoder, video decoder, or video codec configured for encoding and/or decoding images (or frames) of input video data, in particular configured for encoding and/or decoding live video content in real-time or near real-time, such as, for example, a video encoder and/or decoder compliant with the any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions, as the case may be adapted for implementing one or more embodiments of the proposed methods.

Further, the proposed methods may advantageously be implemented with the Kubernetes orchestration software solution, whether in its existing versions and/or their evolutions, as the case may be adapted for implementing one or more embodiments of the proposed methods. In the following, embodiments of the proposed methods, apparatuses and computer programs are described in the exemplary context of the Kubernetes orchestration software solution. However, it will be appreciated by a person having ordinary skill in the relevant art that other suitable orchestration software solutions may be used in place of or in addition to the Kubernetes orchestration software solution which is given by way of example only according to embodiments of the present subject disclosure.

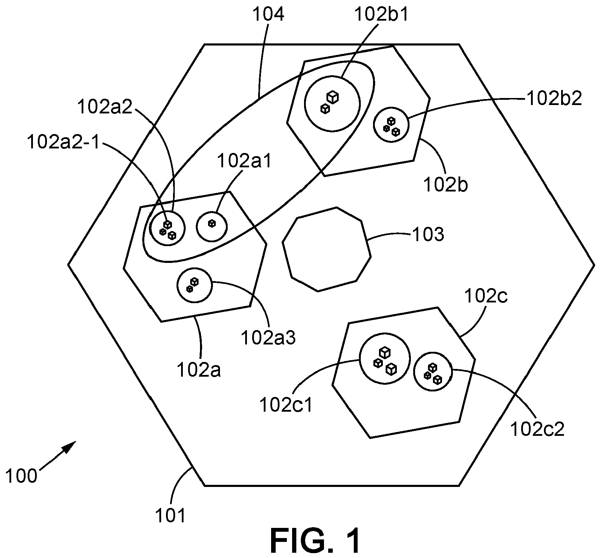

Shown on Fig. 1 is a Kubernetes orchestration software solution 100 that comprises one or more clusters (one cluster 101 being represented in Fig. 1) of computing machines (which may be virtual or physical). Each cluster 101 comprises at least one cluster management node 103, sometimes referred to as a "Master," which is a control plane machine, and one or more cluster computing nodes 102a, 102b, 102c, that may be implemented in respective computing servers, and are sometimes referred to as "Workers", on which applications may run, for example in a distributed manner in case of an application running on multiple Workers.

An application 104, such as a micro-services application, may be set to run on one or more Workers 102a, 102b, 102c of the cluster 101, in the form of one or more cluster nodes (also referred to as "Pods") 102b1, 102a& and 102a2 running on each Worker 102b and 102a on which the application 104 is executed. A Pod corresponds to the smallest Kubernetes software unit, and can comprise one or more Container nodes (also referred to as "Containers") which share the same network and storage resources. A Container is a standard unit of software that packages up a code and all its dependencies, so that it may run quickly and reliably on any computing environment.

As illustrated by Fig. 1, a cluster 101 may contain a first, second, and third Workers 102a, 102b, and 102c, with the first Worker 102a containing three Pods 102a1, 102a2, 102a3, the second Worker 102b containing two Pods 102b1 and 102b2, and the third Worker 102c also containing two Pods 102c1 and 102c2. Each Worker 102a, 102b, and 102c can be embodied as a server. Kubernetes provides a scheduler configured for managing all aspects of the Containers running in the cluster 101, including the allocation of hardware resources (e.g. CPU, memory, etc.), network and service planning and automation.

The Kubernetes orchestration software solution 100 shown on Fig. 1 illustrates an exemplary runtime environment, with Clusters, Workers, Pods, and Containers that are runtime environment units, operating as running programs in the runtime environment.

Resource allocation is managed in a Kubernetes environment at the Container level, and for each Container of a Kubernetes environment a request for resources can be placed with the Master node, and upper limits for requested resources can also be defined for managing the environment.

In particular, the values of requests and limits of CPU and memory resources defined for Containers of a Pod will determine a Quality of Service (QoS) level, among "Guaranteed", "Burstable", and "BestEffort" assigned to the Pod.

For a Pod to be assigned a "Guaranteed" QoS class, every Container in the Pod must have a memory limit and a memory request, which must be the same, and every Container in the Pod must have a CPU limit and a CPU request, which must be the same. A Pod is assigned a "Burstable" QoS class if the Pod does not meet the criteria for being assigned a "Guaranteed" QoS class, and at least one Container in the Pod has a memory or CPU request. For a Pod to be assigned a "BestEffort" QoS class, the Containers in the Pod must not have any memory or CPU limits or requests.

Video processing applications (e.g. video coding applications) may advantageously use a Kubernetes orchestration software solution with one or more Pods having a "Burstable" QoS because for this QoS class Kubernetes guarantees the CPU and memory resources requested for the Containers of the Pod, and ensures that the Containers of the Pods do not exceed the limits of CPU and memory set for Containers of the Pod.

For example, a Kubernetes environment may be used to implement a time-constrained video processing application program, such as a video encoding and/or decoding application used for processing video content distributed in live mode, by running one or more instances of the video processing application program on respective Pods in order to better control system resources, such as CPU resources and memory, allocated to each Pod that are manageable through the Kubernetes environment. Based on resources requested for each instance of the video processing application program to be running on a corresponding Pod, and resources available on each Worker of the Kubernetes environment, the Kubernetes Master will determine a Worker comprising the Pod in which the instance of the video processing application program will run.

Once an instance of a video processing application program is running on a Pod of a Kubernetes environment (e.g. a video encoding program encoding live content) with resources allocated by the Master of the Kubernetes environment, for example based on the QoS level requested for the Pod, it may be desirable to change the resources used by the Pod on which the video processing application program is running.

Kubernetes provides limited possibilities for updating resource allocated to a Pod: First, a resource allocation update can be achieved through the VerticalPodScaling (VPA) method which performs an automatic update of the resources allocated to a Pod with CPU and/or memory request and limit values calculated by a VPA recommender. The VPA is a Kubernetes function which provides recommendation for resources to be allocated to a Pod. For example, if a Pod is executed in VPA mode on a Worker, the VPA function will monitor resource usage of the Pod and may provide recommendations for updating resources allocated to the Pod (e.g. increasing CPU resources). The Kubernetes Master may then, based on the recommendations, determine an update of resources allocated to the Pod.

A resource allocation update can also be performed through the Kubernetes "Rolling Update" feature, which allows updating a whole configuration (including resources) by replacing a Pod with another one (without service interruption for non-real-time applications, such as HTTP server applications for example).

A significant drawback of these resource allocation update schemes provided by Kubernetes, in particular with respect to time-constrained application programs (such as real-time or near real-time application programs) is that they all require to restart the Pod in order for the resource allocation changes to take effect. Indeed, any restart of a processing Pod results in a loss of real-time for any application that processes data in real-time. For example, a video encoding application may be configured to provide live video streaming services with a Pod hosting a video encoder. A video distribution service operator may desire to specify resources allocated to a Pod running a video encoder instance, which creates a need for dynamically updating computational resources (e.g., in the case of Kubernetes, memory and CPU resources) allocated to the Pod according to a setpoint defined by a user (e.g. the operator). Should the Pod be restarted or recreated for a resource allocation update to take effect, with a running interruption even as short as a few milliseconds, the video encoder would lose its state, that is, the parameters calculated during the encoding of previous video frames, and would also lose buffered video frames waiting to be encoded or transferred, resulting in an interruption of the encoder output encoded bitstream and/or in frame loss.

The present subject disclosure advantageously provides a dynamic resource allocation update scheme that can be applied to a Pod, in which case it does not require restarting the Pod so that changes can take effect. As a consequence, the proposed scheme is particularly well suited for dynamic resource allocation of a cluster node (e.g. a Pod) running a time-constrained application program (such as a real-time (or near real-time) application program), in a computing environment comprising an orchestration software solution (e.g. Kubernetes) comprising the cluster node running the application program.

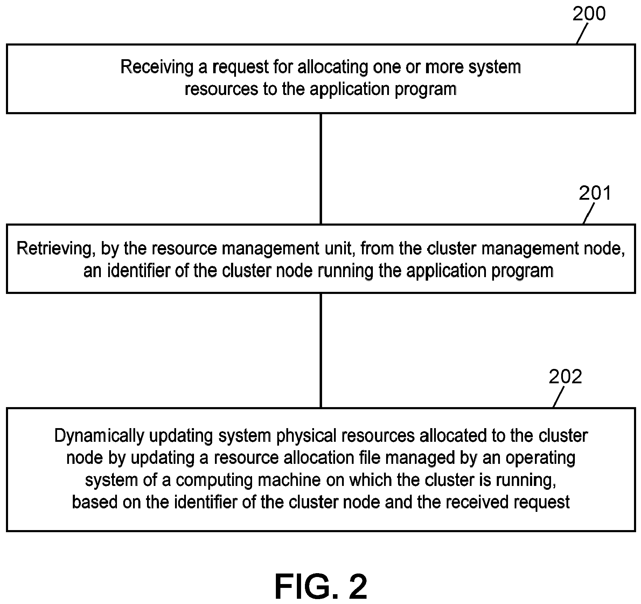

Fig. 2 is a block schematic diagram of a resource allocation method according to embodiments of the present subject disclosure.

The exemplary method illustrated by Fig. 2 may advantageously be implemented using the exemplary orchestration software solution shown on Fig. 1.

One may therefore consider for implementation of embodiments of the proposed method a computing environment comprising a proposed resource management unit and an orchestration software. The orchestration software may in some embodiments contain one or more clusters, each cluster comprising a cluster management node and one or more cluster computing nodes, with each cluster computing node comprising one or more cluster nodes. The proposed method may be implemented in a cluster of the orchestration software which comprises a cluster management node and at least one cluster node running an application program, possibly comprised in a cluster computing node of the cluster.

The proposed method may advantageously be implemented on the proposed resource management unit, which may be implemented in software, hardware, or as a combination of software and hardware. In one or more embodiments, the proposed resource management unit may be implemented as a software program running on a server. Depending on the embodiment, the server on which the resource management unit may or not be distinct from a server on which the orchestration software is running, in which case the resource management unit may be configured with a data communication interface for data communication with the cluster management node of the orchestration software. In some embodiments, the resource management unit may be implemented as a software program running on the same server (e.g. a Linux server) as the one on which the cluster of the orchestration software is running. In some embodiments in which the resource management unit and the orchestration software are configured to run on the same server (e.g. a Linux server), the resource management unit may be implemented as a software program running in the cluster node (e.g. the Kubernetes Pod) in which the application program is running.

In embodiments where the orchestration software used is a Kubernetes orchestration software, such as for example that illustrated by Fig. 1, the cluster may be a Kubernetes Cluster, the cluster management node may be a Kubernetes Master, the cluster computing node may be a Worker, and the cluster node may be a Pod running an application. In the Kubernetes context, the proposed resource management unit may be referred to as a "PodHandler".

In one or more embodiments, the resource management unit may receive (200) a request for allocating one or more system resources to the application program currently running on the cluster node.

The request may be any request related to any system resources to be allocated and/or currently allocated to the application program, and may take, depending on the embodiment, various form.

In some embodiments, the request may pertain to one or more performance metrics parameters, such as Quality of Service (QoS), real-time processing, minimum required resources, etc.

Once received, the request may be processed in order to configure a system physical resources allocation map based on values of the one or more performance metrics parameters provided in the request.

In one or more embodiments, the request may directly pertain to system resources, as it may comprise system resources parameters for resources used by the computing machine to be allocated to the application program. For instance, the request may indicate a number of CPU cores to be used on the computing machine for running the application program in the cluster node.

Further and/or prior to receiving the request, the resource management unit may retrieve (201), for example using the cluster management node, an identifier of the cluster node running the application program.

Depending on the embodiment, the resource management unit may be configured to retrieve part or all of the computing configuration used for running the application program in the orchestration software. For example, embodiments where the application is running in several cluster nodes, whether such cluster nodes are comprised in one cluster computing node or several cluster computing nodes, the resource management unit may be configured to retrieve an identifier for some or each of the cluster nodes in which the application program of interest is running.

In one or more embodiments, the resource management unit may be configured based on the computing structure of the orchestration software that runs the application program, and retrieve an identifier for the smallest unit for said orchestration software. For example, in a Kubernetes environment, wherein Pods are the smallest Kubernetes units, the resource management unit may be configured for, based for example on an identifier of the application program, retrieve respective identifiers of all the Pods in which the application program is running.

As in some embodiments the application program is running in one or more cluster nodes, one may assume that the application program is using system physical resources that have been allocated by the cluster management node managing the cluster computing node(s) comprising respective cluster nodes in which the application program is running. Focusing on a cluster node on which the application is running, the cluster management node managing the cluster computing node hosting the cluster node will have allocated system physical resources for the application to run on the cluster node.

The resource management unit may also be configured for dynamically (that is, while the cluster node is running the application) updating (202) such system physical resources allocated to the cluster node by updating a resource allocation file managed by an operating system of a computing machine in which the cluster node is running, based on the identifier of the cluster node and the received request. In some embodiments, the system physical resources allocation being updated may have been allocated to the cluster node by the cluster management node. Such would typically be the case for an update of resources initially allocated by the cluster management node. In other embodiments, several updates may be performed, so that the system physical resources allocation being updated may have been allocated to the cluster node through a previous update according to an embodiment of the present subject disclosure.

In some embodiments, the dynamic update of system physical resources allocated to the cluster node may comprise updating several resource allocation files managed by the operating system, depending in particular on the configuration of the operating system.

Updating the system physical resources allocated by the cluster management node to the cluster node through an update of one or more resource allocation files managed by an operating system of a computing machine on which the cluster is running advantageously allows updating such system physical resources in a transparent manner for the orchestration software environment, so that the update does not require restarting the cluster node (e.g. a Pod in a Kubernetes environment) in order to take effect.

Therefore the proposed method advantageously allows updating system physical resources used by an application program running in a cluster node (e.g. a Pod) in an orchestration software environment, for example a time constrained (e.g. a real-time or near real-time) application program running in a cluster node, without impacting the real-time or near real-time computing performance of the application program.

For example, the proposed method may advantageously be used for implementation of a real-time or near-real-time video processing application (e.g. a video encoding application used for encoding live video streams) on a Pod in a Kubernetes environment.

In one or more embodiments, the one or more resource allocation files used for implementing the proposed method may be files used by the operating system of the computing machine on which the cluster is running to allocate resources, such as physical resources, of the computing machine to the cluster node.

In some embodiments, the proposed method may be used in the context of an orchestration software environment, such as Kubernetes software, configured on a Linux computing machine, so that the one or more resource allocation files managed by an operating system may in some embodiments comprise one or more files in the Linux "cgroups" filesystem. For example, in a Kubernetes environment running on a Linux machine, the physical resources allocated, for example by the Master, to a Pod running an application may be described in one or more Linux files in the cgroups filesystem dedicated to the Pod, so that the resource management unit may advantageously locate this/these file(s), based for example on an identifier of the Pod running the application, in order to modify the file(s) to update system physical resources currently allocated, for example by the Master, based on a received request.

In one or more embodiments, the orchestration software solution may use container nodes, as is the case for Kubernetes with Containers. In such cases, a cluster node on which the application program is running may comprise one or more container nodes, which may be software nodes sharing the same network and storage resources. Container nodes are used in some computing environment in order to provide an isolated and self-sufficient computing environment for running an application program. For example, a container node will include all the software dependencies (such as Python, gnss, or other dependencies) in an isolated software container. A first container may include all the dependencies to run an application program for a version of Python, and a second container may be used to run the same application program with another version of Python. Therefore, system physical resources may be allocated by the cluster management node per container, so that the one or more resource allocation files managed by the operating system of the computing machine may describe system physical resource allocation per container node of each cluster node in which the application program is running. In such embodiments, the resource management unit may further advantageously retrieve, for example from the cluster management node, an identifier of the one or more container nodes used for running the application program. The retrieved identifiers of the one or more container nodes may advantageously be used to change the one or more resource allocation files.

In one or more embodiments, the resource management unit may advantageously create a resource allocation process running on the operating system of the computing machine on which the cluster is running in order to retrieve information related to nodes of the orchestration software environment in which the application program is running. In particular, information may be retrieved on the types of nodes of the orchestration software environment for which system physical resource allocation is specified in one or more resource allocation files managed by the operating system.

For example, in embodiments where the computing machine operates with a Linux operating system environment, the resource management unit may be configured for creating a resource allocation process, for example running in the background such as a daemon process.

In one or more embodiments, the resource management unit may further be configured for receiving, from such process, a first resource allocation status of system resources currently allocated to the cluster node.

The first resource allocation status may advantageously provide information on system physical resources currently allocated, for example by the cluster management node, to the cluster node. For example, in a Kubernetes orchestration software environment, the first resource allocation status may provide information on CPU and/or memory resources allocated to a Pod in which an application program of interest is running, or provide information on CPU and/or memory resources allocated to an application program of interest running on a Pod.

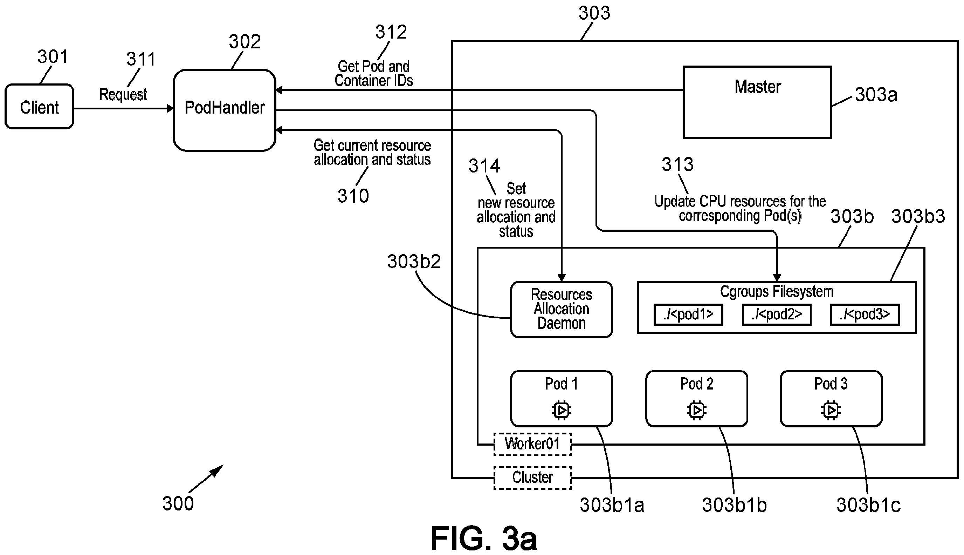

Fig. 3a shows an exemplary architecture of a computing environment according to embodiments of the present subject disclosure.

Shown on Fig. 3a is a computing environment 300 comprising a client unit 301 ("Client" on the figure), a resource management unit 302 ("PodHandler" on the figure) and a cluster unit 303 that may, in some embodiments, be a Kubernetes cluster in a Kubernetes orchestration software environment.

The cluster unit 303 comprises a cluster management node (303a), and a cluster computing node (303b). In embodiments where the cluster unit 303 is a Kubernetes cluster as illustrated on the figure, the cluster management unit 303a may be a Kubernetes Master, and the cluster computing unit may be a Kubernetes Worker ("Worker01" on the figure).

As shown on Figure 3a, the cluster computing unit 303b may comprise three cluster nodes 303b1a, 303b1b, 303b1c, which may be Pods in a Kubernetes orchestration software environment ("Pod 1", "Pod 2", "Pod 3" on the figure).

In some embodiments, the resource management unit 302 may be configured to create a resource allocation process 303b2 that runs in the cluster computing unit 303b. The resource allocation process may advantageously be created to run in the cluster computing unit 303b in order to be used by the resource management unit 302 to retrieve information regarding system resource allocated by the cluster management node 303a to cluster nodes 303b1a, 303b1b, 303b1c of the cluster computing node 303b.

In embodiments where the cluster 303 is configured on a computing machine running a Linux operating software, the resource allocation process 303b2 may be created as a daemon process in order to run in the background, in which case it may be a resources allocation daemon ("Resources Allocation Daemon" on the figure).

In one or more embodiments, the environment 300 may be a runtime environment, and one or more of the cluster nodes 303b1a, 303b1b, 303b1c may run one or more instances of an application program, for example of a video coding application, executed on the computing machine on which the orchestration software environment 303 is running. Specifically, the orchestration software environment 303 may be used to manage, through the cluster management node 303a, the execution of the application program on one or more of the cluster nodes 303b1a, 303b1b, 303b1c to whom system physical resources will have been allocated by the cluster management node 303a.

In one or more embodiments, the resource allocation process 303b2 may be configured to retrieve information regarding system physical resources allocated by the cluster management node 303a to the one or more cluster nodes 303b1a, 303b1b, 303b1c on which the application is running, and to provide such information to the resource management unit 302. Depending on the embodiment, information regarding system physical resources allocated by the cluster management node 303a to the one or more cluster nodes 303b1a, 303b1b, 303b1c on which the application is running may be provided to the resource management unit 302 upon request, or proactively, that is, with no need for a request from the resource management unit 302, for example on a regular basis or on a periodical basis. The resource allocation unit 302 may thereby obtain 310 information regarding system physical resources allocated by the cluster management node 303a to the one or more cluster nodes 303b1a, 303b1b, 303b1c on which the application is running.

Depending on the embodiment, information regarding system physical resources allocated by the cluster management node 303a to the one or more cluster nodes 303b1a, 303b1b, 303b1c on which an instance of the application program is running that is obtained by the resource allocation unit 302 may comprise information regarding CPU resources, and possibly status information for the resources used to run the application program, such as, for example information on amount of CPU resources and memory resources used for running the application program among the CPU and memory resources allocated to the application program.

The resource management unit 302 may also retrieve from the cluster management node 303a information on the manner in which execution of the application program has been scheduled in computing resources of the cluster 303. For example, in a Kubernetes orchestration software environment 303, the Master 303a may have allocated one or more of the Pods 303b1a, 303b1b, 303b1c to the execution of the application program, with respective system physical resources, and for each of the allocated Pods 303b1a, 303b1b, and 303b1c, may have allocated one or more Containers, with respective system physical resources. In such cases, the resource management unit 302 may be configured to obtain 312 from the Master 303a identifiers of Pods and Containers in which the instance of the application program has been scheduled to run. The obtained Pod and Container IDs may then be used to request 310 from the resource allocation process 303b2 information regarding system physical resources allocated to the Pods and Containers scheduled to run the application program instances, based on the obtained IDs. For example, the resource management unit 302 may transmit to the resource allocation process 303b2 a request for resource allocation information that includes the obtained Pods and Containers IDs and receive in response information on resources allocated to the corresponding Pods and Containers. As another example, the resource management unit 302 may configure the resource allocation process 303b2 with the obtained Pods and Container IDs, so that the resource allocation process 303b2 may be configured to provide resource allocation information for the Pods and Containers in which an instance of the application program is running.

In one or more embodiments, the resource management unit 302 may be configured to receive 311 from the client unit 301 new allocation information for the application program. The resource management unit 302 may further be configured for, upon receipt of new allocation information for the application program, process such new allocation information to generate new resource allocation rules that are mappable to information regarding system physical resources allocated, for example by the cluster management node 303a, to the one or more cluster nodes 303b1a, 303b1b, 303b1c on which an instance of the application program is running obtained from the resource allocation process 303b2. Such new resource allocation rules may be advantageously generated in order to compare them with current resource allocations described by information regarding system physical resources allocated by the cluster management node 303a to the one or more cluster nodes 303b1a, 303b1b, 303b1c on which the application program instance is running.

The resource management unit 302 may be further configured to determine whether or not to update the current resource allocations based on the new allocation rules generated based on allocation information received from the client unit 301. In cases where the resource management unit determines that the current resource allocations are to be updated, the resource management unit may generate resource allocation update rules to be used for updating the system physical resources allocated to the one or more cluster nodes 303b1a, 303b1b, 303b1c on which the application program instance is running.

The resource allocation update rules may comprise rules for updating various resource allocation units, such as that used by the cluster management node for allocating system physical resources to the one or more cluster nodes 303b1a, 303b1b, 303b1c on which the application program instance is running. For example, in a Kubernetes orchestration software environment, the resource allocation update rules may comprise rules for updating CPU resources for each Pod using for running an instance of the application program. For example, an update of one or more Kubernetes Pod CPU Limit resource allocation parameters, and/or one or more Kubernetes CPU Affinity resource allocation parameters may be specified by the resource allocation update rules.

In order to perform the resource allocation update based on the resource allocation update rules, the resource management unit 302 may be configured to access one or more resource allocation files managed by the operating system of the computing machine on which the cluster 303 is running. In embodiments where the operating system of the computing machine is of the Linux type, a cgroups filesystem 303b3 will have been created by the operating system for describing resource allocations. In embodiments where a Kubernetes orchestration software environment is used, a resource allocation file may have been created in the cgroups filesystem for each Pod 303b1a, 303b1b, 303b1c that corresponds to respective resource allocations to the Pods 303b1a, 303b1b, 303b1c managed by the resource management unit 303a (files "./<pod1>", "./<pod2>", "./<pod3>" on the figure).

In one or more embodiments, the resource management unit 302 may be configured to update one or more resource allocation files managed by the operating system based on the resource allocation update rules. In some embodiments, a resource allocation file managed by the operating system on which the cluster 303 is running may be updated based on the resource allocation update rules. In some embodiments, the resource allocation update may be performed for each cluster node 303b1a, 303b1b, 303b1c on which the application is running through an update 313 of respective corresponding resource allocation files based on an identifier of the cluster node and a corresponding resource allocation update rule (which is itself based on the resource allocation request received 311 from the client unit 301).

For example, in a computing environment using a Kubernetes orchestration software solution running on a computing machine using a Linux-type operating system, the resource management unit 302 may be configured to access one or more resource allocation files in the Linux Cgroups Filesystem respectively corresponding to Pods 303b1a, 303b1b, 303b1c, based on respective identifiers of Pods for which allocated resources are to be updated, and update the one or more resource allocation files based on respective resource allocation update rules for the Pods generated based on the resource allocation request received 311 from the client unit 301, resulting for example in an update of CPU resources for the Pods for which allocated resources are to be updated.

In some embodiments, the resource management unit 302 may be configured to obtain 312 identifiers of the one or more Pods on which an instance of the application program of interest is running, generate resource allocation update rules for each of these one or more Pods based on the resource allocation request received from the client unit 301, and update 313 resource allocation files in the Linux Cgroups Filesystem that respectively correspond to the one or more Pods according to the generated resource allocation update rules. The resource allocation update rules may in some embodiments advantageously be based on current resource allocation information obtained 310 through a resource allocation daemon process 303b2.

The proposed scheme therefore advantageously allows replacing the scheduling function provided by the Master in a Kubernetes environment with a scheduling function provided by the resource management unit 302 which is external to the Kubernetes environment, for managing resources used by cluster nodes, i.e. Pods of the Kubernetes environment in which an instance of an application program of interest is running.

In some embodiments, the Kubernetes environment may initially be configured so that the computing nodes of the Kubernetes environment in which the application program of interest is running constitute an isolated runtime environment within the Kubernetes environment, so that the proposed resource management unit may advantageously be used to take over the scheduling of resources, such as CPU resources and memory initially allocated by the Kubernetes Master, used by the application program of interest, in order to serve client requests specifically directed to the execution of such application program.

In one or more embodiments, the resource management unit 302 may further be configured to configure 314 the resource allocation process 303b2 with updated resource allocation. This advantageously allows storing locally to the computing environment 303 information regarding allocation and status of resources allocated to an application program of interest. Such information regarding allocation and status of resources allocated to the application program of interest may thereafter advantageously be retrieved by the resource management unit 302 from the resource allocation process 303b2 with no need to query the cgroups filesystem. In addition, such information regarding allocation and status of resources allocated to the application program of interest may comprise allocation and status information that is not available through the cgroups filesystem, for example information of a finer granularity than that available in files of the cgroups filesystem.

For example, the resource management unit 302 may have generated an allocation rule according to which 3 CPU cores, among the CPU resources of the computing machine on which the Cluster 303 is running, are allocated to « Pod 1 » 303b1a. The allocation rule may specify which CPU cores of which CPU physical node(s) should be allocated to « Pod 1 » 303b1a. Such information is of finer granularity than that available in the cgroups filesystem, which will store how many CPU cores are allocated to « Pod 1 » 303b1a, without specifically identifying each CPU core and CPU physical node.

In some embodiments, information regarding updated resource allocation, possibly with status information, may be stored by the resource allocation process 303b2 in memory of the computing machine, in the form of a array or table identifying, for each cluster node in which an instance of the application program is running, the CPU cores that are used by the cluster node. The table may also indicate which CPU cores have not yet been allocated.

Therefore, in some embodiments, the resource allocation process 303b2 may advantageously be used to store, locally to the cluster in which an instance of the application program of interest is running, detailed information regarding resources (e.g. CPU resources and/or memory resources) allocated to run the instance of the application program, and possibly information regarding status of resources (e.g. CPU resources and/or memory resources) of the computing machine on which the instance of the application program is running. Such status information may for example comprise information on which CPU resource has already been allocated, and/or which CPU resource is free of allocation.

In the following, exemplary embodiments of the present subject disclosure are described in the exemplary context of a Kubernetes orchestration software running on a Linux server.

In some embodiments, a resource management unit (which may in a Kubernetes context be referred to as a "PodHandler") instance may be created on the server in order to manage resources, such as computational resources, of a pool of Workers of a Cluster running on the server. According to the present subject disclosure, the PodHandler may advantageously allow updating CPU resources allocated to one or more Pods running an application program of interest without any need to restart these Pods.

The PodHandler instance may be configured to determine resource allocation rules, through, for example, selecting one or more Workers where one or more Pods to be used to run the application program of interest should run, and to manage dynamic allocation of resources to these one or more Pods without using a Kubernetes feature that would require restarting these Pods.

With respect to a Pod used for running the application program of interest, the Pod may be launched in Burstable QoS mode, with a CPU limit value set to an initial value to be allocated to the Pod.

In one or more embodiments, the Pods targeted by a dynamic resource allocation according to the present subject disclosure may advantageously be scheduled on a dedicated pool of Workers, so that other Pods that are scheduled on other Workers of the Cluster may not be impacted by the dynamic resource allocation. Therefore, dynamic resource management for the dedicated pool of Workers may be handled by the PodHandler, while resource management for the rest of the Cluster (including Workers that are not in the dedicated pool) may be handled by the Kubernetes Scheduler.

In a Kubernetes environment, features such as "Taints" and "Tolerations" may advantageously be used to control the Pods that may be scheduled by the Kubernetes Master of the Cluster on the dedicated pool of Workers. "Taints" is a Kubernetes feature that allows a Kubernetes Node to repel a set of Pods. "Tolerations" is another Kubernetes feature that allows Pods to which it is applied to be scheduled on Kubernetes Nodes with matching Taints. The Taints and Tolerations features may be used together to ensure that Pods are not scheduled onto certain Nodes, which allows ensuring that Pods in which the application program of interest is to run are scheduled on a dedicated pool of Workers.

Isolating a pool of Workers dedicated to dynamic resource allocation according to embodiments of the present subject disclosure advantageously allows ensuring that the Kubernetes scheduler (Master) will not set up in the dedicated pool Pods that are not used for running the application program of interest.

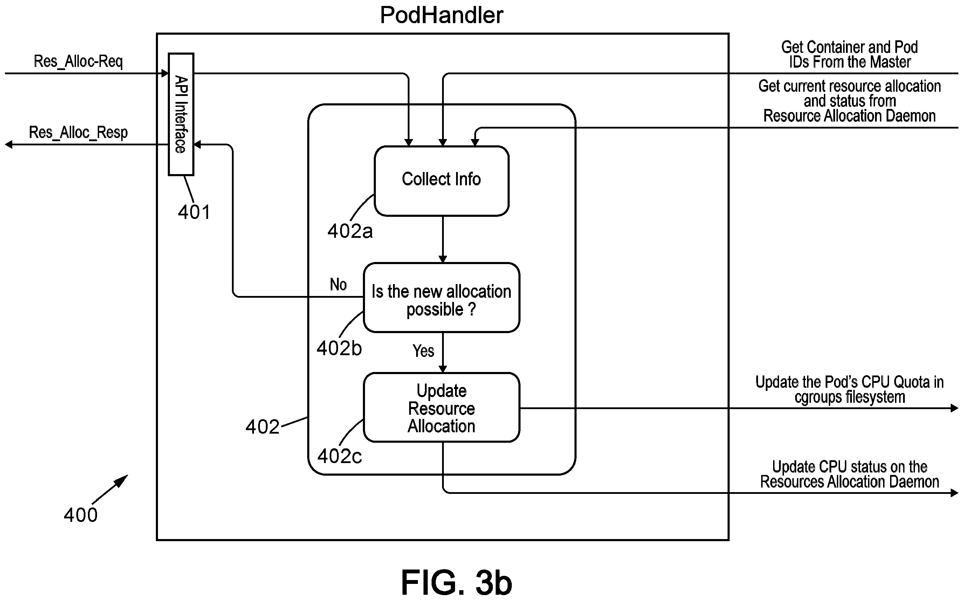

In one or more embodiments, updating the resources of a Pod may comprise several operations, which are described in the following with reference to Figure 3b, which shows an exemplary resource management unit 400 and operations thereof according to one or more embodiments. The exemplary resource management unit of Fig. 3b may correspond in some embodiments to the exemplary resource unit 302 shown on Fig. 3a.

Even though Figure 3b illustrates the non-limiting example of an instance of an application program running in a Pod in a Kubernetes environment, the Pod being comprised in a Worker, which Worker is itself comprised in a Cluster running on a computing machine and using system resources, such as CPU resources and memory resources, of such computing machine, a person of ordinary skill in the art would understand that the proposed processes, apparatuses and computer programs of the present subject disclosure are not limited to any specific computing environment, such as for example the above specific Kubernetes environment which is provided as an example only, and may be implemented on any suitable computing environment.

In one or more embodiments, the resource management unit 400 may comprise an API interface unit 401 configured for receiving, from a client unit, a resource allocation request message ("Res_Alloc_Req"), for example a request for updating the resource allocated to the Pod, and transmitting to the client unit a resource allocation response ("Res_Alloc_Resp").

The resource management unit 400 may further comprise a resource management control unit 402.

In some embodiments, the resource management control unit 402 may be configured for, upon receipt of a resource allocation request message from the API interface unit 401, collecting 402a resource allocation and status information to be used for processing the received request.

For example, the resource management control unit 402 may be configured for obtaining, for example from a Master of the Cluster comprising the Pod in which the instance of the application program of interest is running, an identifier of the Pod and of the Containers used for executing the application program. In addition, the resource management control unit 402 may be configured for obtaining, for example from a resource allocation daemon process running on the computing machine on which the Cluster comprising the Pod in which the instance of the application program is running, current resource allocation (e.g. CPU resource currently allocated to the Pod) and current resource status (e.g. status of CPU resources among allocated resources and available resources, for example which CPU cores of which CPU physical node are allocated, and which CPU cores of which CPU physical node are available for allocation) for the Cluster or, depending on the embodiment, for the Worker comprising the Pod in which the instance of the application program is running.

For example, the Linux command « Iscpu », which retrieves CPU architecture information from sysfs and /proc/cpuinfo, may in some embodiments be used to retrieve via the resource allocation daemon a list of all the CPU nodes of the server on which the Pod is running.

In some embodiments, the resource management control unit 402 may further be configured for, once resource allocation and status information has been collected, processing the received request in order to determine 402b whether or not the requested allocation can be granted. In some embodiments, determining whether or not the request can be granted may comprise generating one or more resource allocation rules based on the received request and identifiers of the Pod and the one or more Containers used by the Pod to run the application program, and comparing such resource allocation rules with the current resource allocation and the current resource status obtained from the resource allocation daemon, for the Pod and one or more Containers identified by the obtained identifiers.

In some embodiments, the resource management control unit 402 may be configured to, in cases where the resource allocation rules would lead to increase resource allocated to the Pod compared to resource currently allocated to the Pod of an amount that is not available given the current resource status, issue a reject message to be transmitted through the API interface 401 to the client unit, whereby the resource allocation request is refused by the resource management unit 400.

In some embodiments, the resource management control unit 402 may be configured to, in cases where the resource allocation request can be granted, based on the one or more resource allocation rules being compatible the current resource allocation and the current resource status, the resource management control unit 402 may be configured to perform 402c a dynamic resource allocation update for updating resources allocated to the Pod. The dynamic resource allocation update may comprise updating one or more files in the cgroups filesystem managed by the Linux operating system running on the server on which the Kubernetes environment including the Pod is running, based on the one or more resource allocation rules. The one or more files of the cgroups filesystem that may be modified for the dynamic resource allocation update may correspond to files in which resources allocated to the Pod and to the one or more Containers are specified. The files may be modified in order to change such specifications according to the one or more resource allocation rules. As discussed above, the resource management unit 400 may thereby operate as a scheduler for resources allocated to the Pod, in place of the Master of the Cluster comprising the Pod, which allows modifying resources allocated to the Pod while the Pod is running without restarting the Pod.

Further, the resource management control unit 402 may be configured to, in such cases, issue a grant message (not represented on Fig. 3b) to be transmitted through the API interface 401 to the client unit, whereby the resource allocation request is granted by the resource management unit 400.

In one or more embodiments, a CPU limit value set for the Pod may be updated through the control groups ("cgroups") Linux feature. In a Kubernetes context on a Linux server, upon creation of a Pod, Kubernetes will create volumes in the cgroups filesystem that will contain all information related to the requested physical resources. Accordingly, the present disclosure provides that the CPU resources of a Pod may advantageously be managed in a Linux server through the Linux cgroups feature.

In particular, CPU resources of the Linux server may be accessed through files created in the /sys/fs/cgroup/cpu,cpuacct/kubePods/burstable/<Pod-id>/<Container-id>/ volume. In this volume, a first file will hold a "CPU CFS Period" value set to a default value of 100000 microseconds, and a second file will hold a "CPU CFS Quota" value which corresponds to the CPU limit value set (originally by the Kubernetes scheduler) for the Pod.

In order to indicate 1 CPU core, a CPU CFS Quota value of 100000 is to be set (the same as the CPU CFS Period default value) as such value represents 100 percent of the time of one. A CFU CFS Quota value of 200000 may be set in order to indicate 2 CPU cores. Fractional CPU CFS Quota values of core usage may also be used. For example, a CPU CFS Quota set to 50000 corresponds to 0.5 core, i.e., the application will run for 50000 microseconds and pause for 50000 microseconds.

CPU CFS Period values may be selected depending on constraints of the application of interest. For example, in the case of a Pod that hosts a video encoder and processes a live video stream, in order to avoid that the kernel throttles (pause) the application every second, resulting in delays in encoding frames as compared to the desired encoding rate, a CPU CFS Quota value corresponding to an integer number of cores may advantageously be chosen. The set CPU CFS Quota value can then define the new CPU usage limit for the Pod.

In order to ensure that an updated CPU CFS Quota value set for the Pod corresponds to CPU resources that are guaranteed to the Pod, the resource management control unit 402 may further be configured to ensure that the sum of the limit values (CPU CFS Quota values) of all the processing Pods that will be scheduled on a Worker will not exceed the physical resources available on the Linux server.

In one or more embodiments, update information regarding allocated resources (e.g. CPU resources) per the updated allocation may be transmitted to the resource allocation daemon to be stored locally on the server.

In a server operating under Linux, the Linux scheduler may by default schedule the threads of the Pod on different CPU cores, so that the application running in the Pod may be distributed on different CPU cores. However, in particular for time-constrained applications, such as real-time or near real-time applications, the system may be advantageously configured such that the application running in the Pod exclusively uses some specific CPU cores for all of its threads, and ignores other CPU cores available in the Linux server. The lack of control on which CPU cores are used for running threads of the application may not be desirable, in particular for a real-time or near real-time application, since the application threads may be paused on one CPU core and then moved to another CPU core, which will add extra latency. In addition, if a thread is moved to a CPU core of another physical CPU, memory access may take longer.

In order to provide an improved computing environment for time constrained applications (e.g. real-time and near real-time applications, for example live video codec applications), a processor affinity (which may also be referred to as "CPU affinity") may advantageously be used to assign the threads of the application running in the Pod to specific CPU cores among the CPU resources of the server. In some embodiments, the Linux "taskset" command (or, depending on the specifics of the operating system used by the system, any other suitable command for changing CPU affinity) may advantageously be used for changing CPU affinity, preferably in correspondence with the modification of cgroups filesystem files, so that the number of CPU cores corresponds to the CPU CFS Quota value set for the Pod. In such embodiments, one or more specific CPU cores that comply with the CPU CFS Quota value may be chosen by the PodHandler to be passed as arguments to the taskset command.

In embodiments in which CPU affinity is used to assign the threads of the application running in the Pod to specific CPU cores, it may be desirable to ensure that no other application or system threads use these specific CPU cores. In one or more embodiments, the system may further be advantageously configured such that the application running in the Pod exclusively uses some specific CPU cores for all of its threads, and ignores other CPU cores available in the Linux server, and the specific CPU cores are exclusive to the application in that no other threads use these specific CPU cores. In some embodiments, in order to obtain exclusive use of the CPU cores by the application, the real-time execution priority of the application may advantageously be changed, from its current value (which may be the default value "SCHED_OTHER" corresponding to a normal priority level), to a value "SCHED_FIFO" guaranteeing 100 percent usage of the CPU cores for the Pod. In some embodiments, the "chrt" Linux command (or, depending on the specifics of the operating system used by the system, any other suitable command for configuring real-time scheduling attributes, such as priority, of a process) may be used, for example for setting a scheduling policy for the process corresponding to the application running in the Pod. For example, through attributing a "SCHED_FIFO" scheduling policy to the application, the processing Pod can be guaranteed 100 percent usage of the cores. As a result, no other application can run on the specific CPU cores that are used by the application running in the Pod.

In embodiments where the present subject disclosure is used for an application running in real-time that requires low-latency and high throughput computing, the application may advantageously be scheduled on CPU cores of the same physical CPU node, so as to reduce latency related to memory access and optimize processing performances. In some embodiments, the proposed resource management unit (PodHandler) which may be configured to obtain a status of resources of the Workers involved in processing for the application, may be further configured to manage the allocation of CPU cores. In some embodiments, the PodHandler may be configured to follow a series of scheduling rules to ensure that priority is assigned to CPU cores of the same physical CPU node for running the threads of the application. In some embodiments, only CPU cores that belong to the same physical CPU node may be selected through a priority assignment policy (such as CPU affinity) as discussed above. For example, in a Worker that has two physical CPU nodes, the Pod may use CPU cores of a first physical CPU node. The proposed resource management unit may be configured to, when dynamically updating resources allocated to the Pod per the present subject disclosure for increasing the number of CPU cores allocated to the Pod, assign additional CPU cores of the first physical CPU node to the extent available and sufficient for the required CPU resource update. The proposed resource management unit may be configured to generate a scheduling rule in which the additional CPU cores are assigned priority using a CPU affinity function as described above.

A non-limiting exemplary process of updating resources of processing Pods in a Kubernetes environment running on a Linux server pursuant to one or more embodiments of the present subject disclosure is described in the following.

In some embodiments, a resource allocation daemon configured to obtain information related to CPU resources (number, non-uniform memory access (NUMA) architecture, status) may be instantiated on each Worker who belongs to the pool of Workers dedicated to dynamic allocation per the present subject disclosure.

For a given Worker, in order to update the resources of a Container in a Pod that is already running, the PodHandler may be configured to retrieve from the Master an identifier of the Pod and Container to be able to locate them in the cgroups Linux filesystem. The resource allocation daemon may be configured to retrieve the current resource allocation of the Pod and the status of the other CPU cores of the Worker. The PodHandler may be configured to, once it has obtained current resource allocation and status information, check if the requested resources are available, for example based on a received request for resource allocation. The PodHandler may further be configured to, in the case where the requested resources are available, modify the CPU Quota in cgroups, and look for the CPU cores to be assigned with preference to keep using the same physical CPU node. In some embodiments, the status of the CPU cores may be modified in the resource allocation daemon, and these CPU cores may be passed as a taskset argument in the Pod in order to change the CPU Affinity. In some embodiments, the Linux "chrt" command may be executed to ensure the SCHED_FIFO priority to the application.

In some embodiments, the PodHandler may be configured to return a message to the user indicating that the operation cannot be performed in the case where the resources available on the Worker are not sufficient for the new allocation.

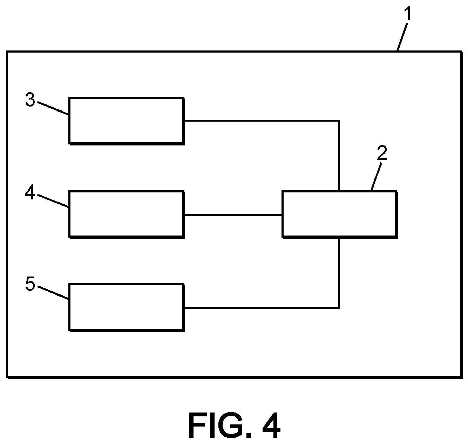

Fig. 4 illustrates an exemplary resource management unit 1 configured to use a resource allocation feature in accordance with embodiments of the present subject disclosure.

The apparatus 1, which may comprise one or more computers, includes a control engine 2, resource allocation engine 3, a data communication engine 4, and a memory 5.

In the architecture illustrated on Fig. 4, all of the resource allocation engine 3, data communication engine 4, and memory 5 are operatively coupled with one another through the control engine 2.

In one or more embodiments, the resource allocation engine 3 may be configured to perform various aspects of embodiments of the proposed method for resource allocation as described herein. In some embodiments, the resource allocation engine 3 may be implemented in software and incorporated in a computing machine running on a server and operating with an orchestration software such as Kubernetes according to embodiments of the present subject disclosure.

In one embodiment, the data communication engine 4 is configured to receive resource allocation requests, for example from a client unit, and to output responses to requests to the client unit.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage computer storage medium, capable of storing resource data, including resource allocation rules, resource allocation status, and resource status data (e.g. CPU status data) for use according to one or more embodiments of the present subject disclosure, coupled to the control engine 2 and operable with the data communication engine 4 and the resource allocation engine 3 to facilitate management and processing of resource data stored in association therewith.

In embodiments of the present subject disclosure, the apparatus 1 is configured for performing the resource allocation methods described herein.

It will be appreciated that the apparatus 1 shown and described with reference to Fig. 4 is provided by way of example only. Numerous other architectures, operating environments, and configurations are possible. Other embodiments of the node may include fewer or greater number of components, and may incorporate some or all of the functionality described with respect to the apparatus components shown in Fig. 4. Accordingly, although the control engine 2, resource allocation engine 3, data communication engine 4, and memory 5 are illustrated as part of the apparatus 1, no restrictions are placed on the location and control of components 2 - 5. In particular, in other embodiments, components 2 - 5 may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A computer-implemented resource allocation method, comprising, in a computing environment comprising a resource management unit and a cluster comprising a cluster management node and a cluster node running an application program:
- receiving, by the resource management unit, a request for allocating one or more system resources to the application program;
- retrieving, by the resource management unit, from the cluster management node, an identifier of the cluster node running the application program;
- dynamically updating system physical resources allocated to the cluster node by updating a resource allocation file managed by an operating system of a computing machine on which the cluster is running, based on the identifier of the cluster node and the received request.

2. The method according to claim 1, wherein the cluster node is comprised in a cluster computing node of the cluster.

3. The method according to any of the preceding claims, wherein the system physical resources allocated to the cluster node were allocated by the cluster management node to the cluster node.

4. The method according to any of the preceding claims, wherein the application program is a video processing application program.

5. The method according to any of the preceding claims, wherein the request comprises system resources of the computing machine to be allocated to the application program.

6. The method according to any of the preceding claims, wherein the resource allocation file is used by the operating system to allocate resources of the computing machine to the cluster node.

7. The method according to any of the preceding claims, wherein the cluster node comprises one or more container nodes, wherein the method further comprises: retrieving, by the resource management unit, from the cluster management node, respective identifiers of the one or more container nodes, and wherein the resource allocation file is updated based on the identifiers of the one or more container nodes.

8. The method according to claim 1, further comprising: creating, by the resource management unit, a resource allocation process running on the operating system in the cluster computing node, and receiving, from the resource allocation process, a first resource allocation status of system resources currently allocated to the cluster node, and determining a system resource allocation update based on the first resource allocation status and the received request, wherein the resource allocation file is updated based on the system resource allocation update.

9. The method according to claim 8, further comprising: transmitting to the resource allocation process a request for the first resource allocation status, wherein the first resource allocation status is received in response to the request for the first resource allocation status.

10. The method according to any of claims 8 and 9, further comprising: receiving, from the resource allocation process, a second resource allocation status of system resources that are not currently allocated to the cluster node, wherein the system resource allocation update is further determined based on the second resource allocation status.

11. The method according to any of the preceding claims, wherein dynamically updating resource allocation files managed by the operating system comprises: updating respective values of one or more resource allocation parameters configured in the resource allocation file for the cluster node.

12. The method according to any of the preceding claims, wherein the one or more system resources comprise CPU resources which comprise a CPU quota parameter defining a number of CPU cores, wherein the updating the resource allocation file comprises setting a value of the CPU quota parameter to a value representing a number of CPU cores allocated to the cluster node.

13. The method according to claim 12, wherein the value represents an integer number of CPU cores.

14. The method according to any of claims 12 and 13, wherein the cluster computing node is executed on a physical machine, and wherein the value is determined such that a cumulative number of CPU cores allocated to cluster nodes of the cluster computing node does not exceed CPU resources that are available on the physical machine.

15. The method according to any of claims 12 and 13, further comprising : in case a cumulative number of CPU cores allocated to cluster nodes of the cluster computing node exceeds CPU resources that are available on the physical machine, responding to the request for allocating one or more system resources with a message informing that the request cannot be served.

16. The method according to any of the preceding claims, wherein the one or more system resources comprise CPU resources which comprise CPU cores, wherein the updating the resource allocation file comprises assigning all the software threads of the cluster node to one or more CPU cores among the CPU cores.

17. The method according to claim 16, further comprising: assigning a maximum execution priority to the execution of the cluster node on the one or more CPU cores.

18. The method according to any of the previous claims, wherein the one or more system resources comprise CPU resources which comprise CPU cores, wherein the updating the resource allocation file comprises assigning all the software threads of the cluster node to CPU cores of a same physical CPU node of the cluster computing node.

19. An apparatus, the apparatus comprising a processor and a memory operatively coupled to the processor, wherein the apparatus is configured to perform a method according to any of claims 1 to 18.

20. A computer program product comprising computer program code tangibly embodied in a computer readable medium, said computer program code comprising instructions to, when provided to a computer system and executed, cause said computer system to perform a method according to any of claims 1 to 18.

21. A computer system comprising non-transitory media encoded with code that, when executed by a processor, cause said computer system to perform a method according to any of claims 1 to 18.
